# EUROPEAN PATENT APPLICATION

(11) **EP 2 713 653 A1**
(43) Date of publication of application: **02.04.2014**
(21) Application number: 12306190.5
(22) Date of filing: 28.09.2012
(51) Int. Cl.: H04W 36/04

(54) **User plane handover for heterogeneous networks**

(71) Applicant: Alcatel Lucent, 75007 Paris (FR)
(72) Inventor: Godin, Philippe, 91620 Nozay (FR)
(74) Representative: 2SPL Patentanwälte

(57) **Abstract**

A method to handover a user equipment (2) from a first base station (1) to a second base station (5), said first base station (1) being connected to a mobility management entity for the control plane and to a serving gateway for the user plane and providing a user plane radio protocol stack (3) per radio access bearer and a control plane radio protocol stack (4) to the user equipment (2), said second base station (5) controlling a cell overlaid by a cell under control of the first base station (1) and connected to the mobility management entity for the control plane and to the serving gateway for the user plane, said method comprising the following steps
- relocating the user plane (3) radio protocol stack to the said second base station (5) for at least a radio access bearer so that the corresponding user plane traffic is delivered to the user equipment (2) through the user plane radio protocol stack (3) of the said second base station;
- reconfiguration of the user equipment (2) via a radio resource control connection according to the relocation so that the UE sends the user plane uplink data of the radio access bearer to the second base station only and the control plane uplink data to the first base station only;
- performing a user plane switch of the at least radio access bearer towards the serving gateway through the mobility management entity to update the user plane (3) from the second base station and keep unchanged the control plane (4) from the first base station towards the mobility management entity.

## Description

### FIELD OF THE INVENTION

The present invention relates to protocol stack architecture within Long Term Evolution (LTE) systems.

### BACKGROUND OF THE INVENTION

It is known that deploying small cells within a cellular network has the effect of enhancing the network capacity. Accordingly, to promote broadband services and meet the traffic growth, there have been different wireless network deployments including different cell sizes ranging from kilometers down to meters.

Concretely, a cellular network includes a plurality of sets of small cells, respectively, overlaid by a big umbrella cell called macro cell. Small cells - including micro cells, pico cells and femto cells - are conventionally deployed in dense traffic environments such as urban/suburban areas and city centers.

It follows that to support dense traffic in a given area a large number of small cells on different frequencies could be deployed, resulting in inter-frequency heterogeneous networks. For example, the use of a higher frequency for the small cell layer compared to the macro cell overlay network layer enables high data rates for the small cell traffic.

However, one of the most challenging issues of small cell networking is handover management, or more generally mobility management between the macro cells and the small cells. In fact, the denser the small cell deployment is, the more frequent mobile stations move across cells, causing more handover demands. Therefore, to benefit of the high data rates served by the small cells, the mobile station is constrained to experience very frequent heavy handover mechanisms between the macro cell and the small cells, leading to lower quality of service (i.e. degradation of communication quality, temporary interruption, data loss, potential risk of service drop), and faster mobile station power consumption. In particular, this service quality degradation is more severe as the small cells deployment is dense.

An object of the present invention is to enhance the network quality of service in dense small cell networks where the small cells are overlaid by a macro cell network.

Another object of the present invention is to enhance handover mechanisms within inter-frequency heterogeneous networks, and particularly within a large cell (a macro cell) overlaying a plurality of small cells and make handovers more seamless in this environment.

Another object of the present invention is to alleviate handover signaling load for small cells of a given macro cell.

Another object of the present invention is to provide a method to deliver the user plane traffic via the small cells to benefit from higher data rates while keeping the user equipment served by the control plane of the macro cell.

### SUMMARY OF THE INVENTION

Various embodiments are directed to addressing the effects of one or more of the problems set forth above. The following presents a simplified summary of embodiments in order to provide a basic understanding of some aspects of the various embodiments. This summary is not an exhaustive overview of these various embodiments. It is not intended to identify key of critical elements or to delineate the scope of these various embodiments. Its sole purpose is to present some concepts in a simplified form as a prelude to the more detailed description that is discussed later.

Various embodiments relate to methods to handover a user equipment from a first base station to a second base station, said first base station being connected to a mobility management entity for the control plane and to a serving gateway for the user plane and providing a user plane radio protocol stack per radio access bearer and a control plane radio protocol stack to the user equipment, said second base station controlling a cell overlaid by a cell under control of the first base station and connected to the mobility management entity for the control plane and to the serving gateway for the user plane, said method comprising the following steps
- relocating the user plane radio protocol stack to the said second base station for at least a radio access bearer so that the corresponding user plane traffic is delivered to the user equipment through the user plane radio protocol stack of the said second base station;
- reconfiguration of the user equipment via a radio resource control connection according to the relocation so that the UE sends the user plane uplink data of the radio access bearer to the second base station only and the control plane uplink data to the first base station only;
- performing a user plane switch of the at least radio access bearer towards the serving gateway through the mobility management entity to update the user plane from the second base station and keep unchanged the control plane from the first base station towards the mobility management entity.

In accordance with a broad aspect, the mobile management entity keeps the first base station as radio access network anchor.

Various embodiments further relate to communication systems to handover a user equipment from a first base station to a second base station, said first base station being connected to a mobility management entity for the control plane and to a serving gateway for the user plane and providing a user plane radio protocol stack per radio access bearer and a control plane radio protocol stack to the user equipment, said second base station controlling a cell overlaid by a cell under control of the first base station and connected to the mobility management entity for the control plane and to the serving gateway for the user plane, the said first base station being configured to
- relocate the user plane radio protocol stack to the said second base station for at least a radio access bearer so that the corresponding user plane traffic is delivered to the user equipment through the user plane radio protocol stack of the said second base station;
- reconfigure the user equipment via a radio resource control connection according to the relocation so that the UE sends the user plane uplink data of the radio access bearer to the second base station only and the control plane uplink data to the first base station only;
- perform a user plane switch of the at least radio access bearer towards the serving gateway through the mobility management entity to update the user plane from the second base station and keep unchanged the control plane from the first base station towards the mobility management entity.

While the various embodiments are susceptible to various modification and alternative forms, specific embodiments thereof have been shown by way of example in the drawings. It should be understood, however, that the description herein of specific embodiments is not intended to limit the various embodiments to the particular forms disclosed.

It may of course be appreciated that in the development of any such actual embodiments, implementation-specific decisions should be made to achieve the developer's specific goal, such as compliance with system-related and business-related constraints. It will be appreciated that such a development effort might be time consuming but may nevertheless be a routine understanding for those or ordinary skill in the art having the benefit of this disclosure.

### BRIEF DESCRIPTION OF THE DRAWINGS

The objects, advantages and other features of the present invention will become more apparent from the following disclosure and claims. The following non-restrictive description of preferred embodiments is given for the purpose of exemplification only with reference to the accompanying drawing in which
- FIG.1 is a schematic diagram illustrating a radio protocol architecture for a user plane and a control plane according to the prior art;
- FIG.2 is a schematic diagram illustrating a radio protocol architecture for a user plane and a control plane according to one embodiment;
- FiG.3 is a schematic diagram illustrating a handover procedure according to one embodiment;
- FIG.4 is a schematic diagram illustrating interactions between two network base stations according to one embodiment.

### DETAILED DESCRIPTION OF ILLUSTRATIVE EMBODIMENTS

By the term user equipment (UE) it is intended to mean any user device (also known as mobile station, subscriber station, mobile terminal, user terminal, or wireless device) supporting LATE or LTE-A, or both.

An eNodeB (or eNB for evolved node B, also known as base transceiver system, base station, or access point) controlling a macro cell is designated hereafter as a macro eNodeB (or a macro base station). Similarly, an eNodeB controlling a small cell (such as, a micro cell, a pico cell or a femto cell) is designated as a small eNodeB or a small base station (respectively, a micro eNodeB, a pico eNodeB, a femto eNodeB).

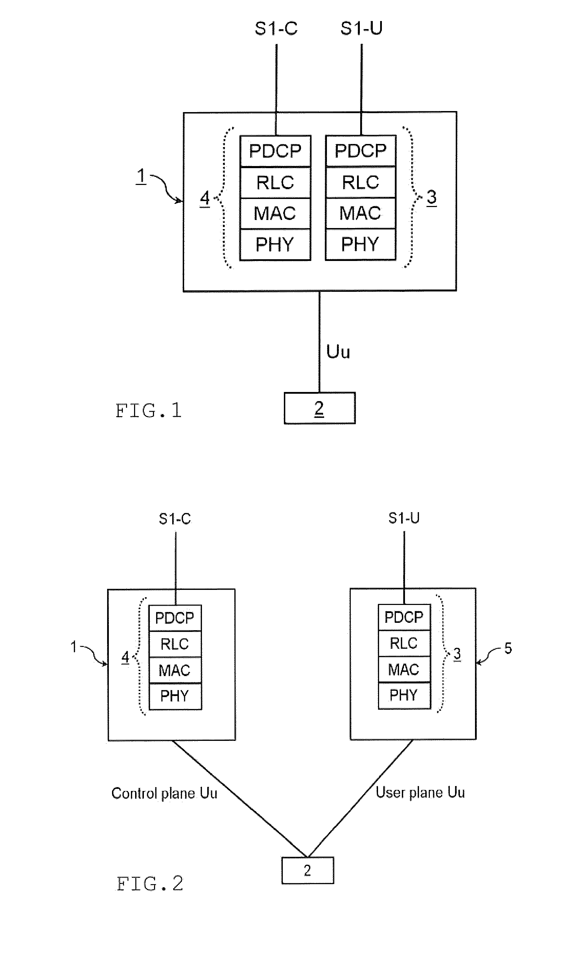

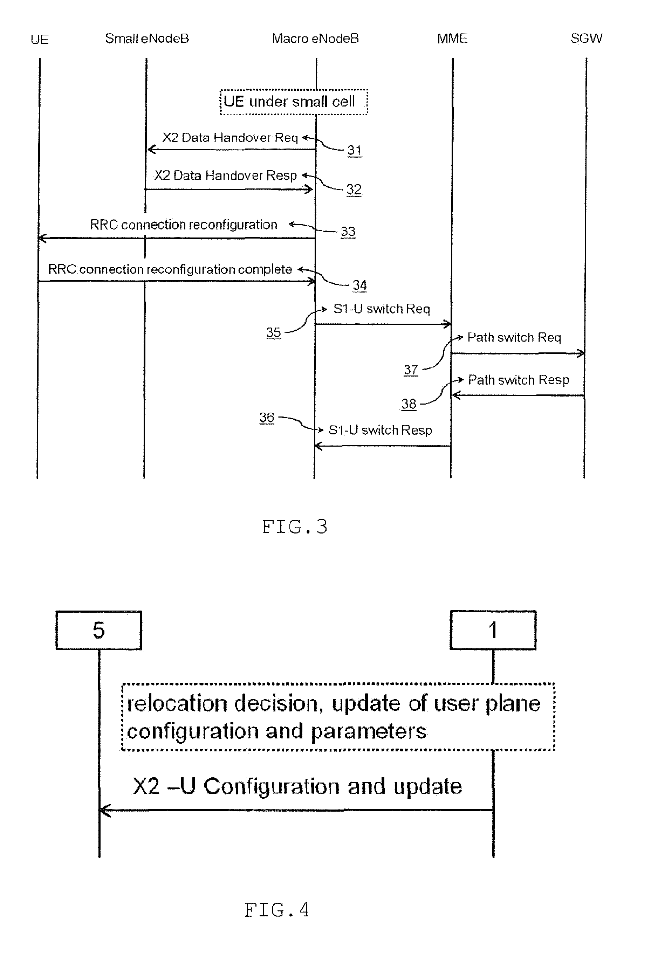

With reference to figure 1, there is shown a macro eNodeB **1** connected to the core network through the 3GPP-defined S1 interface which is divided to S1-Control plane **(S1-C)** and S1-User plane **(S1-U).** The eNodeB **1** connects to the Mobility Management Entity (MME) by means of the S1-C interface also called S1-MME interface and to the Serving Gateway (S-GW) (MME and S-GW are shown in figure 3) by means of the S1-U interface. Moreover, the macro eNodeB **1** provides, via an LATE radio interface **Uu,** a user plane **3** and a control plane **4** to a UE **2**.

Within LTE networks, eNodeBs are interconnected by means of the 3GPP defined X2 interface.

The layers of the radio interface protocol between the UE **2** and the macro eNodeB **1** are based on the open system interconnection (OSI) model.

In fact, the user plane **3** which is responsible for carrying the data traffic of the UE **2** (i.e. for user data transmission) relies on a radio protocol stack per E-RAB (EUTRAN Radio access bearer) located in the macro eNodeB **1**. This radio protocol stack includes a Packet Data Convergence Protocol (PDCP) layer, a Radio Link Control (RLC) layer, a Medium Access Control (MAC) layer, and a Physical (PHY) layer.

The control plane **4** which is responsible for control mechanisms by carrying control information (also known as signaling) is based on a radio protocol stack located in the macro eNodeB **1**. This radio protocol stack includes a Packet Data Convergence Protocol (PDCP) layer, a Radio Link Control (RLC) layer, a Medium Access Control (MAC) layer, and a Physical (PHY) layer.

A radio access bearer is a logical channel or connection corresponding to a single data stream or flow (such as a packet data connection, a speech connection or a video connection) between the user equipment **2** and the macro eNodeB **1**.

In particular, according to the prior art as depicted in figure 1, the radio protocol stack for the user plane **3** and the radio protocol stack for the control plane **4** reside both in the macro eNodeB **1**.

With reference now to figure 2, the radio protocol stack for the control plane **4** and that of the user plane **3** are split between two eNodeB: the serving macro eNodeB **1** and a serving user plane small eNodeB **5**. The control plane **4** stack is maintained located in the serving macro eNodeB **1**. In fact, the user plane **3** stack for some or all of the EUTRAN Radio access bearer(s) (E-RAB(s)) is relocated (i.e. transferred) to the small eNodeB **5**, which results in the final location of the user plane **3** for some or all of the E-RABs in the small eNodeB **5** (the user plane stack of the other E-RAEs, if any, remaining in the macro eNB1).

By user plane stack relocating from the macro eNodeB **1** to the small eNodeB **5**, it is intended to mean the fact of delegating, or transferring the functions of this plane to its corresponding one in the small eNodeB **5**.

In other words, all the PDCP, RLC, MAC and PHY user plane entities of the involved E-RABs are relocated to be into the small eNodeB **5** while the PDCP, RLC, MAC entities of the control plane **4** (and of the user plane stacks of E-RABs not selected) remain in the macro eNodeB **1**.

The protocol architecture of figure 2 is based on the fact that, when the UE **2** served by the macro cell is under (or moves towards) the coverage (or the coverage edge) of a small cell (i.e. a potential handover target small cell) overlaid by the macro cell, some or all of the E-RAB(s) of this UE are relocated to the small eNodeB **5** while the control plane **4** is kept on the macro eNodeB **1**.

To that end, a handover procedure based on the 3GPP defined X2 interface (designated hereafter as "X2 data handover") is adopted, as depicted in figure 3. This X2 data handover enables to move from the configuration of figure 1 (prior art) to the configuration of figure 2 (split of the control plane **4** and of the user plane **3** for some or all E-RABs between two cells).

The "X2 data handover" transfers only the data bearers (i.e. user plane traffic) for some or all E-RABs to the small eNodeB **5** while keeping the signaling radio bearer (i.e. control plane traffic) in the macro cell.

In fact, the "X2 data handover" comprises the following steps
- relocating the user plane 3 (i.e. data bearer information) of some or all E-RABs from the serving macro eNodeB **1** to the small eNodeB **5** through the X2 data handover request/response messages (steps 32-33 in figure 3) so that the corresponding user plane traffic is delivered to the user equipment **2** through the user plane **3** of the small eNodeB **5**. For this purpose, X2 configuration messages and/or information elements are introduced in order to enable the macro eNodeB **1** ordering changes and updates to the user plane configuration and operation as presented in figure 4. In particular, an X2 message is designed (such as, the X2-U configuration and update message in figure 4) in order to control, from the macro eNodeB **1**, the configuration and operational updates of the user plane entities located in small eNodeB **5** and perform the relocation;
- reconfiguration via the RRC (Radio Resource Control) connection of the UE **2** (steps 33-34 in figure 3) according to the relocation so that the UE **2** sends the user plane uplink data of the selected E-RABs to the small eNodeB **5** only and the control plane uplink data to the macro eNodeB **1** only;
- performing a "S1-U switch" (S1-U Switch Request/response messages) via the MME (steps 35-36 in figure 3) which only updates the S1-U and keeps unchanged the S1 control plane (i.e. S1-MME) which remains between the eNodeB1 and the MME ;
- performing a "path switch" between the MME and the SGW (steps 37-38 in figure 3) to realize the user plane switch of involved E-RABs towards the SGW from the small eNodeB **5**.

This means that the MIME keeps the macro eNodeB **1** as Radio Access Network anchor for the S1-MME termination, while initiating a data path switch request (steps 37-38 in figure 3) towards the SGW (with appropriate data) in order to switch the user plane directly between the small eNodeB 5 and the SGW for the involved E-RABs.

The X2 data handover does not only relocate, to the small eNodeB **5**, the involved PDCP, RLC, MAC entities of the user plane **3** but also part or all of the UE context (such as security information).

Assuming that the relocation is done early, the UE **2** may avoid the interruption time associated with the synchronization to the new small cell. Moreover, because the control plane stack remains in the macro eNB1, the delivery of the necessary reconfiguration (handover) message over RRC to the UE is quick and reliable which greatly contributes to make the handover almost seamless.

Similarly, when the UE moves out to the small cell back to the macro cell back, the same "X2 data handover" method can be used almost seamless with almost no interruption and keeping control plane anchor unchanged at the macro eNodeB **1**.

In one embodiment, not all but some of the user plane bearers are transferred over the small cell only. This means that some of them remain on the macro eNodeB **1**. This flexibility should enable the macro eNodeB **1** to control the selection of the user plane bearers which are transferred over to the small eNodeB **5**.

Advantageously, the above described protocol architecture allow to switch all or part of the user plane back and forth between the macro cell and the small cell without needing to relocate the control plane of the UE between the macro eNodeB **1** and the small eNodeB **5**, therefore ensuring almost seamless handover procedure (reduced interruption time). This is of particular importance with regards to the performance enhancement targets considering the widespread scenario of a UE moving across an heterogeneous network with dense deployment of small cells but without continuous coverage of the small cell layer. Therefore with this invention the UE can benefit from the high data rates for user data in the small cells while not degrading the control plane mobility performance.

Another advantage of the above described method is that it favors the densification of small cells in inter-frequency heterogeneous networks while ensuring seamless and smooth handover executions therein, which results in better network quality of services.

The implementation of the above described protocol architecture and its implementation present the advantage to use new procedures by modifying the control/user plane split for small cell enhancement in winter-frequency heterogeneous networks.

According to the above described method, the UE may receive controlled signaling from the macro eNodeB **1** and services from the small eNodeB **5** offering the higher quality of service. Thereby, anywhere within the macro cell coverage, the users enjoy stable and high quality (broadband) services.

It is to be noted that the above described embodiments may be similarly applied to any other cell (for example a micro cell) overlaying more than one cell of smaller sizes (for example, pico cells or femto cells).

It is to be noted also that the above described protocol architecture is suitable for current 3GPP releases.

## Claims

1. A method to handover a user equipment (2) from a first base station (1) to a second base station (5), said first base station (1) being connected to a mobility management entity for the control plane and to a serving gateway for the user plane and providing a user plane radio protocol stack (3) per radio access bearer and a control plane radio protocol stack (4) to the user equipment (2), said second base station (5) controlling a cell overlaid by a cell under control of the first base station (1) and connected to the mobility management entity for the control plane and to the serving gateway for the user plane, said method comprising the following steps
- relocating the user plane (3) radio protocol stack to the said second base station (5) for at least a radio access bearer so that the corresponding user plane traffic is delivered to the user equipment (2) through the user plane radio protocol stack (3) of the said second base station;
- reconfiguration of the user equipment (2) via a radio resource control connection according to the relocation so that the UE sends the user plane uplink data of the radio access bearer to the second base station only and the control plane uplink data to the first base station only;
- performing a user plane switch of the at least radio access bearer towards the serving gateway through the mobility management entity to update the user plane (3) from the second base station and keep unchanged the control plane (4) from the first base station towards the mobility management entity.

2. The method of claim 1, wherein the mobile management entity keeps the first base station (1) as radio access network anchor.

3. The method of claim 1 or 2, wherein the user plane (3) radio protocol stack is relocated over the 3GPP defined X2 interface.

4. The method of any of the preceding claims, wherein the user plane switch towards the serving gateway from the second base station is performed over the 3GPP defined S1 interface.

5. A communication system to handover a user equipment (2) from a first base station (1) to a second base station (5), said first base station (1) being connected to a mobility management entity for the control plane and to a serving gateway for the user plane and providing a user plane radio protocol stack (3) per radio access bearer and a control plane radio protocol stack (4) to the user equipment (2), said second base station (5) controlling a cell overlaid by a cell under control of the first base station, (1) and connected to the mobility management entity for the control plane and to the serving gateway for the user plane, the said first base station (1) being configured to
- relocate the user plane (3) radio protocol stack to the said second base station (5) for at least a radio access bearer so that the corresponding user plane traffic is delivered to the user equipment (2) through the user plane radio protocol stack (3) of the said second base station;
- reconfigure the user equipment (2) via a radio resource control connection according to the relocation so that the UE sends the user plane uplink data of the radio access bearer to the second base station only and the control plane uplink data to the first base station only;
- perform a user plane switch of the at least radio access bearer towards the serving gateway through the mobility management entity to update the user plane (3) from the second base station and keep unchanged the control plane (4) from the first base station towards the mobility management entity.

6. The communication system of claim 5, wherein the mobile management entity keeps the first base station (1) as radio access network anchor.

## Amended claims

### Amended claims in accordance with Rule 137(2) EPC.

**1.** A method within LTE systems to handover a user equipment (2) from a first base station (1) to a second base station (5), said first base station (1) being connected to a mobility management entity for the control plane and to a serving gateway for the user plane and providing a user plane radio protocol stack (3) per radio access bearer and a control plane radio protocol stack (4) to the user equipment (2), said second base station (5) controlling a cell overlaid by a cell under control of the first base station (1) and connected to the mobility management entity for the control plane and to the serving gateway for the user plane, said method comprising the following steps
- relocating the user plane (3) radio protocol stack to the said second base station (5) for at least a radio access bearer so that the corresponding user plane traffic is delivered to the user equipment (2) through the user plane radio protocol stack (3) of the said second base station;
- reconfiguration of the user equipment (2) via a radio resource control connection according to the relocation so that the UE sends the user plane uplink data of the radio access bearer to the second base station only and the control plane uplink data to the first base station only;
- performing a user plane switch of the at least radio access bearer towards the serving gateway through the mobility management entity to update the user plane (3) from the second base station and keep unchanged the control plane (4) from the first base station towards the mobility management entity.

**2.** The method of claim 1, wherein the mobile management entity keeps the first base station (1) as radio access network anchor.

**3.** The method of claim 1 or 2, wherein the user plane (3) radio protocol stack is relocated over the 3GPP defined X2 interface.

**4.** The method of any of the preceding claims, wherein the user plane switch towards the serving gateway from the second base station is performed over the 3GPP defined S1 interface.

**5.** A communication system within LTE systems to handover a user equipment (2) from a first base station (1) to a second base station (5), said first base station (1) being connected to a mobility management entity for the control plane and to a serving gateway for the user plane and providing a user plane radio protocol stack (3) per radio access bearer and a control plane radio protocol stack (4) to the user equipment (2), said second base station (5) controlling a cell overlaid by a cell under control of the first base station (1) and connected to the mobility management entity for the control plane and to the serving gateway for the user plane, the said first base station (1) being configured to
- relocate the user plane (3) radio protocol stack to the said second base station (5) for at least a radio access bearer so that the corresponding user plane traffic is delivered to the user equipment (2) through the user plane radio protocol stack (3) of the said second base station;
- reconfigure the user equipment (2) via a radio resource control connection according to the relocation so that the UE sends the user plane uplink data of the radio access bearer to the second base station only and the control plane uplink data to the first base station only;
- perform a user plane switch of the at least radio access bearer towards the serving gateway through the mobility management entity to update the user plane (3) from the second base station and keep unchanged the control plane (4) from the first base station towards the mobility management entity.

**6.** The communication system of claim 5, wherein the mobile management entity keeps the first base station (1) as radio access network anchor.
